# EUROPEAN PATENT APPLICATION

(11) **EP 0 753 691 A1**
(43) Date of publication of application: **15.01.1997**
(21) Application number: 95913379.4
(22) Date of filing: 29.03.1995
(51) Int. Cl.: F16K 11/07

(54) **PILOT PRESSURE OPERATED DIRECTIONAL CONTROL VALVE AND OPERATION CYLINDER CONTROL DEVICE**

(30) Priority: 29.03.1994 JP 58895/94; 04.04.1994 JP 65823/94; 12.07.1994 JP 159963/94
(71) Applicant: KOMATSU LTD., Minato-ku, Tokyo 107 (JP)
(72) Inventor: IKEI, Kazunori, Oyama Factory of Kabushiki Kaisha, Oyama-shi, Tochigi-ken 323 (JP); TAKA, Keisuke, Oyama Factory of Kabushiki Kaisha, Oyama-shi, Tochigi-ken 323 (JP)
(74) Representative: TER MEER - MÜLLER - STEINMEISTER & PARTNER
(86) International application number: PCT/JP95/00601
(87) International publication number: WO 95/26476

(57) **Abstract**

A pilot pressure operated directional control valve is provided in which a housing is formed therein with a spool having a plurality of ports, the said spool bore has a spool fittingly inserted therein so as to be slidably displaceable therein and the said spool is slidably displaced both by a spring and under a pilot pressure led into a pressure receiving chamber, and in which a spring box is attached to an end surface of the said housing in a longitudinal direction of the said spool; and the said spring box is provided with a hollow portion which contains the said spring while forming a pressure receiving chamber, as well as a pilot pressure fluid inlet that communicates with the said hollow portion and that is opening in the longitudinal direction of the said spool.

## Description

### TECHNICAL FIELD

This invention relates to a pilot pressure operated directional control valve for switching the flows of a pressure fluid by slidably displacing a spool under a pilot pressure, and to an apparatus for controlling an operating cylinder by using such a directional control valve in which a boom cylinder, an arm cylinder or a bucket cylinder of a power shovel or the like operating cylinder is supplied with a pressure fluid so as to control an operating extension and an operating retraction thereof.

### BACKGROUND ART

A certain pilot pressure operated directional control valve has hitherto been known as disclosed in Japanese Unexamined Patent Publication No. Hei 3-172602.

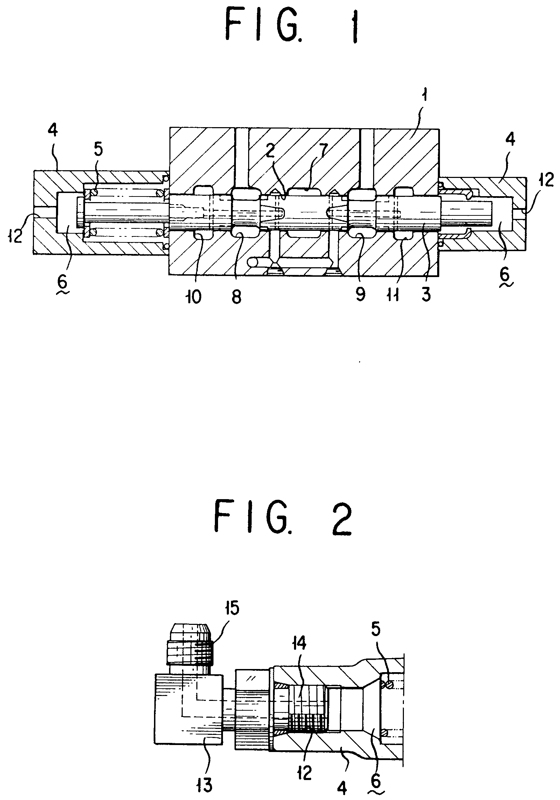

Thus, it is known that in such a directional control valve, as shown in Fig. 1 of the accompanying drawings hereof, a housing 1 is formed therein with a spool bore 2 to which a pump port 7, a first and a second actuator port 8 and 9, and a first and a second tank port 10 and 11 are opened. The said spool bore 2 has a spool 3 fittingly inserted therein whereas the said housing 1 has a pair of spring boxes 4 disposed at its left hand side and right hand side, respectively. The said spool 3 is adapted to take a neutral position when it is energized by a spring 5 provided in one of the said spring boxes 4 and is adapted to be slidably displaced either against, or in a cooperation with, a resilient force by the said spring 5 to take a first position or a second position by supplying a pilot pressure fluid into one of pressure receiving chambers 6 formed in the said left hand side and right hand side spring boxes 4, respectively, to establish and block a communication between the said pump port 7 and the said first or second actuator port 8 or 9, and a communication between the said first or second actuator port 8 or 9 and the said first or second tank port 10 or 11.

This notwithstanding, however, such a pilot pressure operated directional control valve is constructed in such a way that the said spring 5, the said one pressure receiving chamber 6 and a pilot pressure fluid inlet 12 are formed successively on an axis that is coaxial with the said spool 3. Since in addition the said pilot pressure fluid inlet 12 must be made to have such a length that a piping joint such as an elbow can be in threaded engagement therewith, the corresponding spring box 4 needs to be proportionally lengthened. As a consequence, a problem arises in that the length of the entire directional control valve is necessarily increased and the area of the site on which it is mounted (i. e. a site area) is so enlarged.

Here, whilst if the said pilot pressure fluid inlet is formed on a plane that is orthogonal to the spool longitudinal direction of the said spring box 4, the length of the spring box 4 can be shortened, then if a plurality of such housings 1 are stacked one upon another and connected together, a problem is brought about in that a piping joint as mentioned above cannot be connected to the said pilot pressure fluid inlet since the interstice between the adjacent spring boxes 4 is necessarily small in size.

Furthermore, in such a pilot pressure operated directional control valve, it may be noted that in order for a pilot pressure fluid to be supplied into the said pressure receiving chambers 6, a piping joint assembly such as including an elbow must be threaded into and thereby attached to the said pilot pressure fluid inlet 12 of the spring box 4.

For example, as shown in Fig. 2 of the accompanying drawings thereof, the said pilot pressure fluid inlet 12 can be a threaded bore into which the threaded portion 14 of a piping joint 13 may be inserted for a mating engagement therewith.

With such a construction adopted, in order for the said piping joint 13 to be firmly attached to the said spring box 4 and for a fluid leakage from their threaded engagement connection to be prevented, the threaded connection length between the said piping joint 13 and the said pilot pressure fluid inlet 12 of the spring box 4 needs to be increased. Thus, the threaded portion of the said pilot pressure fluid inlet 12 of the spring box 4 engaged with the said piping joint 13 being lengthened, the length of the said spring box 4 will be increased. For this reason, there has hitherto developed the problem that the entire size of a directional control valve of this type must be increased in length and the area of the site on which it is mounted (i. e. the site area) needs to be enlarged.

Also, if the said piping joint 13 has a pipe connecting portion 15 that is not aligned linearly with the said threaded portion 14 but its alignment therewith is L-shaped as shown, it is naturally difficult to orient the said pipe connecting portion 15 in a desired direction. More specifically, whilst if a plurality of such directional control valves are stacked one upon another, adjacent pilot pipe lines can readily be interconnected by orienting their corresponding pipe connecting portions 15 in an identical direction, if a threaded attaching arrangement as mentioned above is then employed for a said piping joint 13, it is altogether possible that the said pipe connecting portions 15 may not be oriented uniformly.

The present invention has been made to obviate such inconveniences and has for its one object to provide a pilot pressure operated directional control valve which is capable of reducing the length of the entire pilot pressure operated directional control valve in the prior art, thereby reducing the said site area; which, if a plurality of housings are stacked one upon another and thereby interconnected, is capable of connecting a said piping joint to a said pilot pressure fluid inlet; and which, if a said pipe connecting portion of a said piping joint is L-shaped, is capable of orienting a plurality of such piping connection portions in an identical direction.

One may also note at this point that a conventional apparatus for controlledly supplying a pressure fluid into an operating cylinder is typically constructed in such a manner that the pressure fluid discharged from a hydraulic pump is supplied into one of a first and a second chamber of the operating cylinder under the control by a pilot pressure operated directional control valve while a pressure fluid is discharged from the other of the said first and second chambers into a reservoir, thereby performing an extending or retracting operation of the said operating cylinder.

In such an apparatus, the said pilot pressure operated directional control valve has a valve block that is formed therein with a spool bore to which a pump port, a first and a second actuator port and a tank port are opened. The said spool bore has a spool fittingly inserted therein so as to be slidably displaceable therein. The said spool can be switched from its neutral position to its first or second position to establish a communication between the said pump port and one of the said first and second actuator ports and a communication between the said tank port and the other of the said first and second actuator ports, thereby permitting the pressure fluid to be supplied and discharged as mentioned above. Also, the said spool can be set at its neutral position to block each of these ports, thereby preventing a return fluid caused to flow into the said first or second actuator port from flowing out into the said reservoir.

There, it should be noted, however, that between the said spool and the said spool bore in the valve block there exists a small clearance which may allow for a fluid leakage and that a retention pressure would, owing to an external load, be produced in the said first or second chamber in the operating cylinder. The said retention pressure will then cause a portion of the said return oil to flow through the above mentioned clearance into the said reservoir. It follows, therefore, that the said operating cylinder will undesirably have either an extending operation or a retracting operation (hereinafter referred to as a "spontaneous fall").

For this reason, the prior art has adopted an arrangement in which a circuit for interconnecting the said retention pressure producing chamber of the operating cylinder and the said actuator ports of the directional control valve is provided with a locking valve which will, when the said directional control valve is at its neutral position, be closed to act to prevent the return fluid out of the said operating cylinder from flowing into a said actuator port of the directional control valve and thus to prevent a spontaneous fall. On the other hand, when the said directional control valve is at its first or second position, the said locking valve will be opened to allow the pressure fluid to flow between the directional control valve and the said operating cylinder.

However, if such a locking valve is incorporated as mentioned above, the said retention pressure will be abnormally elevated when the said operating cylinder is acted upon by an inertia load or an external force.

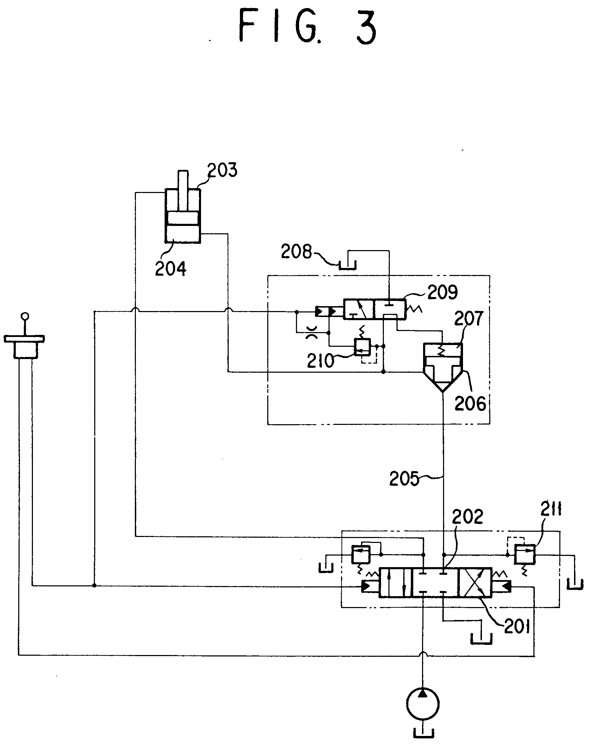

Thence, there has been known an operating cylinder controlling apparatus that is designed to resolve this problem in the prior art, as disclosed in Fig. 3 of Japanese Unexamined Utility Model Publication No. Hei 2-91201, which is provided with a locking valve, called a sequence valve, in a circuit for interconnecting one of the said actuator ports of the directional control valve and the said retention pressure producing chamber of the operating cylinder, as well as a relieve valve in a circuit between the said locking valve and the said operating cylinder, in such a manner that if the said retention pressure is elevated when the said operating cylinder is acted upon by a load of inertia or an external force, the said relief valve may provide a relieving action for the pressure fluid into the said reservoir.

There has also be known another operating cylinder controlling apparatus, as disclosed in Fig. 1 of Japanese Unexamined Utility Model Publication No. Hei 2-91201.

This latter known apparatus, as shown in Fig. 3 of the accompanying drawings hereof, is provided with a locking valve 206, then called a logic valve, in a circuit 205 for connecting one actuator port 202 of a directional control valve 201 and a retention pressure producing chamber 204 of an operating cylinder 203 together, as well as a pilot valve 209 for establishing and blocking a communication between a spring chamber 207 of the said locking valve 206 and a reservoir 208. Then, the said pilot valve 209 has a pressure receiving chamber connected to a relief valve 210 and the said circuit 205 has a connection to a main relief valve 211. Here, if the retention pressure in the said retention pressure producing chamber 204 of the operating cylinder 203 is elevated, the pilot relief valve 210 will act to relieve the pressure fluid to bring the said pilot valve 209 to its communicating position with the pressure fluid relieved, thereby communicating the said spring chamber 207 of the locking valve 206 with the said reservoir 208. The said locking valve will thus be opened to communicate the said retention pressure producing chamber 204 with the said circuit 205. As a result, the retention pressure within the said operating cylinder 203 will be relieved through the said main relief valve 211 and eventually set free.

Of the above mentioned two operating cylinder controlling apparatuses in the prior art, if the former is adopted, it follows that the need to handle a large volumetric flow of the pressure fluid requires a said relief valve to be necessarily large sized and hence any combined unit of the relief valve and the locking valve to be so much large sized. Furthermore, if a plurality of such operating cylinders are involved as is typically the case, a like plurality of such units need to be installed, thus giving rise to the problematical requirement that the area for their installation be necessary which needs to be increased in proportion to the number of the said units.

On the other hand, if the latter type of the control apparatus is adopted, it follows that the use of the said locking valve 206, the said pilot valve 209 and the said pilot relief valve 210, an increased number of components, makes the equipment not only costly but also large sized. Therefore, the problem of the requirement for an enlarged installation site, here again, arises, if a plurality of operating cylinders need to be controlled as in the previous case.

Accordingly, the present invention has been made also to obviate the inconveniences discussed in the preceding paragraphs and has for its another object to provide an operating cylinder controlling apparatus which is reduced both in its cost and area of installation for a unit designed to prevent any spontaneous fall of an operating cylinder.

### SUMMARY OF THE INVENTION

In order to achieve the foregoing objects, there is provided in accordance with the present invention, in a first aspect thereof, a pilot pressure operated directional control valve in which a housing is formed therein with a spool bore having a plurality of ports, the said spool bore has a spool fittingly inserted therein so as to be slidably displaceable therein and the said spool is adapted to be slidably displaced both with a spring and under a pilot pressure led into a pressure receiving chamber, and in which:

a spring box is attached to an end surface of the said housing in a longitudinal direction of the said spool; and the said spring box is adapted to be formed therein with a hollow portion containing said spring and forming a pressure receiving chamber, and a pilot pressure fluid inlet for communicating with the said hollow portion and opening in the longitudinal direction of the said spool.

According to the construction mentioned above, it can be seen that the pilot pressure fluid inlet will no longer be projected largely from the hollow portion in the longitudinal direction of the spool and, as a result, the length of the spring box may be reduced, This will in turn shorten the entire pilot pressure operated directional control valve, thus reducing its site area as required.

Also, since the pilot pressure fluid inlet is opening in the direction of the spool, it can be seen that if a plurality of housings are stacked one upon another and thereby interconnected, an individual pilot pressure fluid inlet may have a corresponding piping joint connected thereto.

Preferably, the said spring box comprises a first cylindrical body and a second cylindrical body which are integrally arranged in a pair and in parallel to each other and which are opening to a left hand side and right hand side which are opposite to each other; the said hollow portion is formed within the said first cylindrical body; an interior of the said second cylindrical body is adapted to be in a communication with an interior of the said first cylindrical body; and the said pilot pressure fluid inlet is constituted with an opening portion of the said second cylindrical body.

It is also preferred that a piping joint should be connected to the said pilot pressure fluid inlet.

It is further desirable that the said pilot pressure fluid inlet be formed with a piping joint attachment hole, that the said piping joint attachment hole be constituted of a large diameter hole and a small diameter hole which are eccentric to each other, that a piping attachment joint be constituted of a fitting portion comprising a large diameter portion and a small diameter portion which are eccentric to each other and a pipe connecting portion, that the said fitting portion be adapted to be fittingly inserted into the said piping joint attachment hole, and that a pressure plate be bolted with the said spring box to act to prevent the said fitting portion from coming out of the said piping joint attachment hole.

According to the construction just mentioned above, it can be seen that the length along which the fitting portion of the piping joint is fittingly inserted into the piping joint attachment hole of the spring box may be shortened. Since the piping joint attachment hole of the spring box can thus be reduced in length, the length of the spring box will be shortened, thereby reducing the entire length of the pilot pressure operated directional control valve, thus making its site area as required smaller.

It can also be seen that with such a pressure plate the piping joint may effectively be prevented from coming out of the piping joint attachment hole. Also, since a large diameter portion and a small diameter portion which are eccentric to each other are fitted, respectively, into a large diameter hole and a small diameter hole which are eccentric to each other, there will be no rotation of the piping joint and its firm attachment will thereby be ensured. If an L-shaped piping joint is adopted, it will be noted that its pipe connecting portion can always be oriented in a predetermined direction.

It is also possible that the said pilot pressure fluid inlet may be formed with the said piping joint attachment hole, that the said piping joint attachment hole may be in the form of a regular polygon, that the said piping joint may be constituted of a fitting portion in the form of a regular polygon and a pipe connecting portion, that the said fitting portion may be adapted to be fittingly inserted into the said piping joint attachment hole, and that a pressure plate may be bolted with the said spring box to act to prevent the said fitting portion from coming out of the said piping joint attachment hole.

According to the construction just mentioned above, it can be seen that the orientation of the pipe connection portion of the piping joint may be altered in accordance with a particular regular polygonal configuration and thus by the number of corners of the particular regular polygon.

It should be noted at this point that it is desirable that an interstice between an inner peripheral portion of the said joint attachment hole and an outer peripheral portion of the said fitting portion be adapted to be sealed by a sealing material, or that an interstice between a bottom portion of the said piping joint attachment hole and an end surface of the said fitting portion be adapted to be sealed by a sealing material.

The present invention also provides, in a second aspect thereof, an operating cylinder control apparatus, which comprises:
a directional control valve;
a locking valve which is disposed in a circuit for interconnecting an actuator port of the said directional control valve and a retention pressure generating chamber of the said operating cylinder, which has a pressure receiving portion and a spring, which is adapted to be thrusted in a direction of communication by an outlet pressure of the said directional control valve and the retention pressure within the said operating cylinder and which is adapted to be thrusted in a direction of blocking by the said retention pressure within the said operating cylinder and the said spring, the said retention pressure acting on the said pressure receiving portion;
a switching valve which is disposed between the said pressure receiving portion of the said locking valve and a reservoir, which is adapted to be energized by the said spring to take its blocking position and which is adapted to take its communicating position by means of a switching means brought into a position for communicating the said circuit with a reservoir; and
a main relief valve which is connected via a check valve to a side to the said operating cylinder of the said rocking valve in the said circuit.

According to the construction just mentioned above, it can be seen that since the main relief valve for preventing an abnormally elevated pressure within the retention pressure generating chamber of the operating cylinder can be placed separately, it will be sufficient to provide only the locking valve and the switching valve correspondingly to each of the operating cylinders. And yet, since the said main relief valve can commonly act for a plurality of operating cylinders, the area of the site on which a unit for preventing a spontaneous fall of any of the plural operating cylinders is mounted may be reduced. Also, since it suffices to provide such a single main relief valve alone, it can be seen that the equipment may be made less costly.

In the construction just mentioned above, it should be noted here that it is desirable that a valve block equipped with the said locking valve and the said switching valve be connected to a valve block of the said directional control valve, that an inlet side of said locking valve be adapted to communicate with the actuator port of said directional control valve, and that each of the said valve blocks be formed therein with a fluid bore for communicating the pressure receiving portion on which the said pilot pressure of the said directional control valve is acting with the pressure receiving portion of a side to the said spring of the said switching valve.

It should further be noted that an operating cylinder control apparatus as mentioned may specifically comprise:
a directional switch valve which is provided with a pump port, a tank port and a first and a second actuator port, which when at its neutral position is adapted to block the said first and second actuator ports, which when at its first pressure fluid supply position is adapted to communicate between the said pump port and the said first actuator port and to communicate between the said second actuator port and the said tank port, and which when at its second pressure fluid supply position is adapted to communicate between the said pump port and the said second actuator port and to communicate the said first actuator port and the said tank port;
a first circuit for connecting the said first actuator port to a retention pressure generating chamber of the said operating cylinder;
a second circuit for connecting the said second actuator port to the other chamber of the said operating cylinder;
a locking valve which is disposed in the said first circuit, which is adapted to be thrusted in a direction of communication both under a pressure of the said first actuator port and under a pressure within the said retention pressure generating chamber, and which is adapted to be thrusted in a direction of blocking both by a spring and under the pressure within the said retention pressure generating chamber acting on a pressure receiving portion;
a switching valve which is disposed in a drain path connected to the pressure receiving portion of the said locking valve, which is held at a blocking position by a spring, and which is brought to a communicating position under a pressure at the pressure receiving portion; and
a main relief valve which is connected to a side to the said retention pressure generating chamber of the said locking valve in the said first circuit and to the said second circuit via respective check valves, and may have a construction in which
   the said second pressure receiving chamber of the said directional control valve is connected to the said pressure receiving portion of the said switching valve.

### BRIEF EXPLANATION OF THE DRAWINGS

The present invention will better be understood from the following detailed description and the drawings attached hereto showing certain illustrative embodiments of the present invention. In this connection, it should be noted that such embodiments as illustrated in the accompanying drawings are intended in no way to limit the present invention, but to facilitate an explanation and understanding thereof.

In the accompanying drawings:
Fig. 1 is a cross sectional view of a pilot pressure operated directional control valve in the prior art;
Fig. 2 is a cross sectional view of a piping joint attachment portion in the above mentioned example in the prior art;
Fig. 3 is a hydraulic circuit diagram of an operating cylinder control apparatus in the prior art;
Fig. 4 is a cross sectional view of a first embodiment of the pilot pressure operated directional control valve according to the present invention;
Fig. 5 is a left hand side view of the structure shown in Fig. 2;
Fig. 6 is a cross sectional view taken along the line VI-VI of Fig. 5;
Fig. 7 is a cross sectional view of a second embodiment of the pilot pressure operated directional control valve according to the present invention:
Fig. 8 is a cross sectional view of a third embodiment of the pilot pressure operated directional control apparatus according to the present invention;
Fig. 9 is a left hand side view of the structure shown in Fig. 8;
Fig. 10 is a front view of a piping joint in the above mentioned third embodiment of the present invention;
Fig. 11 is a cross sectional view of a fourth embodiment of the pilot pressure operated directional control valve according to the present invention;
Fig. 12 is a front view of a piping joint in the above mentioned third embodiment of the present invention;
Fig. 13 is a cross sectional view of a fifth embodiment of the pilot pressure operated directional control valve according to the present invention;
Fig. 14 is a cross sectional view taken along the line XIV-XIV of Fig. 13:
Fig. 15 is a hydraulic circuit diagram of an operating cylinder control apparatus which constitutes a sixth embodiment of the present invention;
Fig. 16 is a cross sectional view illustrating a specific structure of the directional control valve for use in the above mentioned sixth embodiment of the present invention; and
Fig. 17 is a right hand side view of the structure shown in Fig. 16.

### BEST MODES FOR CARRYING OUT THE INVENTION

Hereinafter, suitable embodiments of the present invention with respect to a pilot pressure operated directional control valve and an operating cylinder control apparatus using the same will be set forth with reference to the accompanying drawings hereof.

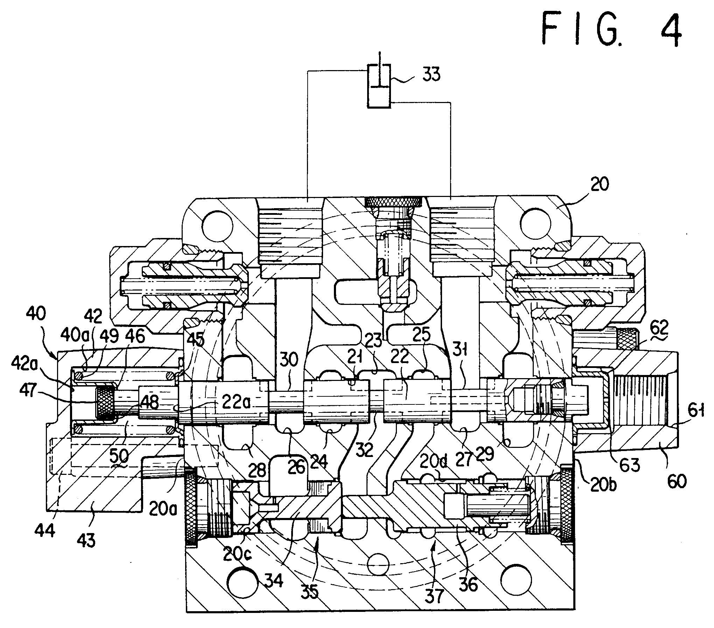

As shown in Fig. 4, a housing 20 is formed therein with a spool bore 21 to which a pump port 23, a first and a second load pressure detecting port 24 and 25, a first and a second actuator port 26 and 27 and a first and a second tank port 28 and 29 are opened. The said spool bore 21 has a spool 22 fittingly inserted therein. The above mentioned spool 22 is formed with a first and a second small diameter portion 30 and 31 and an intermediate small diameter portion 32 so that when located at its neutral position as shown in Fig. 4, it may block each of the ports mentioned above. And, when the said spool 22 is slidably displaced rightwards in Fig. 4 to take its first position, a communication will be established each between the said pump port 23 and the said second load pressure detecting port 25, between the said first load pressure detecting port 24 and the said first actuator port 26, and between the said second actuator port 27 and the said second tank port 29. It should be noted here that the said first load pressure detecting port 24 and the said second load pressure detecting port 25 remain communicated with each other at all the times. It can accordingly be seen that a pressure fluid caused to flow into the said pump port 23 will flow through the first actuator port 26 into an actuator 33 whereas a return fluid out of the said actuator 33 will flow through the said second actuator port 27 into the said tank port 29.

Also, if the said spool 22 is slidably displaced from the state of Fig. 2 leftwards to take its second position, a communication will be established each between the said pump port 23 and the said first load pressure detecting port 24 and between the said second load pressure detecting port 25 and the said second actuator port 27. And, since the said first load pressure detecting port 24 and the said second load pressure detecting port 25 remain communicated with each other at all the times as mentioned above, the pressure fluid in the said pump port 23 will flow into the said actuator 33. Also, since the said first actuator port 26 is caused to communicate with the said first tank port 28, the return fluid out of the said actuator 33 will flow into the first tank port 28 mentioned above.

At this point it should be noted that in Fig. 4, a spool 34 as inserted in a check valve bore 20c constitutes a check valve component 35 whereas a spool 36 as inserted in a pressure reduction valve bore 20d constitutes a pressure reduction valve component 37, and the said check valve component 35 and the said pressure reduction valve component 37 together constitute a pressure compensation valve.

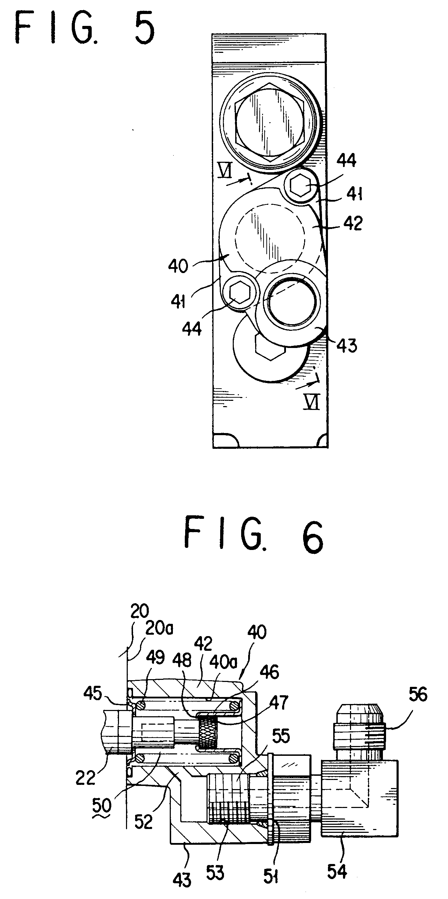

It is seen that a first spring box 40 is attached to one end surface 20a of the above mentioned housing 20 in the longitudinal direction of the said spool 22. As shown in Figs. 5 and 6, the said first spring box 40 comprises a pair of a first cylindrical body 42 having an attachment seat 41 and a second cylindrical body 43 which is integrally mounted with, and extends in parallel to, the said first cylindrical body 42 and which is opening to both a left hand side and a right hand side which are opposite to each other. The said first cylindrical body 42 is secured by a bolt 44 to the said housing 20 coaxially with the said spool bore 21 and is provided therein with a first spring bearing 45 and a second spring bearing 46 so that the first spring bearing 45 may be in contact with both the said one end 20a of the housing 20 and a step portion 22a of the said spool 22 whereas the second spring bearing 46 may be in contact with both a bottom wall 42a of the said first cylindrical body 42 and a step portion 48 of a bolt 47 secured to, or integral with, the said spool 22. Here, a spring 49 is interposed between the said first and second spring bearings 45 and 46 so that the said spool 22 may be held at its neutral position. Note also that the interior of the said first cylindrical body 42 constitutes a pressure receiving chamber 50. Thus, not only does the said first cylindrical body 42 serve to contain the said spring 49 but also it is provided therein with a hollow portion 40a that constitutes the said pressure receiving chamber 50.

An outer end portion of the above mentioned second cylindrical body 43 is configured to be opening in a direction that is parallel to the longitudinal direction of the said spool 22, and a portion at which the said body 43 is so opening, here constitutes a pilot pressure fluid inlet 51. Also, an inner end portion of the said second cylindrical body 43 is configured to communicate via a small diameter bore 52 with the interior (i. e., the said pressure receiving chamber 50) of the said first cylindrical body 42. Note further that the said pilot pressure fluid inlet 51 is formed with a threaded portion 53, and that the said pilot pressure fluid inlet 51 is located at an approximately identical position to the end of the said pressure receiving chamber 50 in the direction in parallel to the longitudinal direction of the said spool 22.

A first threaded portion 55 of a piping joint 54 such as an elbow is inserted into the said threaded portion 53 of the pilot pressure fluid inlet 51 of the said second cylindrical body 43 to establish an mating engagement therewith whereas a second threaded portion 56 of the said piping joint 45 is fitted with an interiorly threaded pipe for a pilot pressure fluid to establish a mating connection therewith.

The first threaded portion 55 and the second threaded portion 56 mentioned above are configured to be L-shaped as a whole to enable the said pipe for the pilot pressure fluid to be connected approximately in parallel to the said one end surface 20a of the housing 20.

It is also seen that a second spring box 60 is attached to the other end surface 20b of the said housing 20 in the longitudinal direction of the said spool 22. The said second spring box 60 is only formed with a pilot pressure fluid inlet 61 and a pressure receiving surface 62 and does not contain a spring.

That is to say, since the spool 22 can be held at its neutral position by the said spring 49 disposed in the said first spring box 42 and is also arranged to be slidably displaceable both leftwards and rightwards against the said spring 49, there is no need to provide a spring within the said second spring box 60. In this connection it should be noted that within the said second spring box 62 there is provided a seat 63 that is designed to regulate a slidable displacement rightwards of the said spool 22.

This being the case, it can be seen that the second spring box 60 if provided in the form of a cylindrical body may have a length that is reduced by the space in which a spring otherwise needs to be contained.

This notwithstanding, however, it is not definitely objectionable to replace the said second spring box 60 with the said first spring box 40 as one is to be attached there.

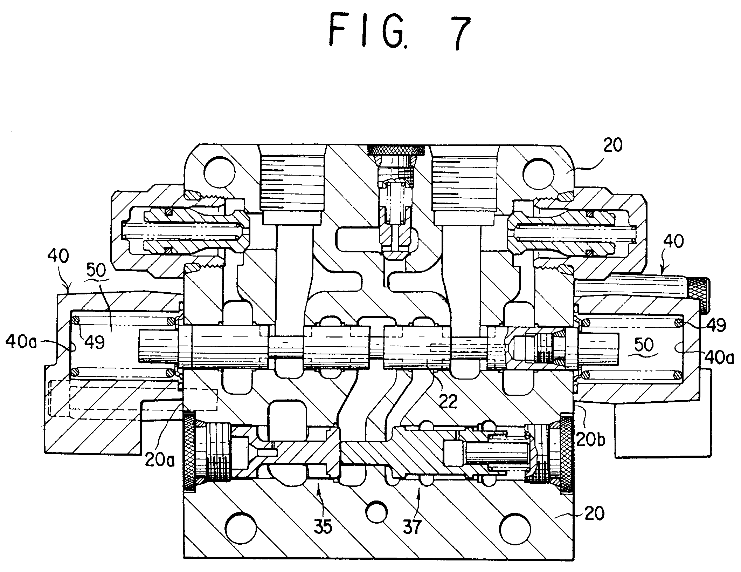

Fig. 7 shows a second embodiment of the pilot pressure operated directional control valve according to the present invention. In the instant embodiment, the one end surface 20a and the other end surface 20b of a said housing 20 have each a said first spring box 40 attached thereto and a said spring 49 is contained in a said first cylindrical body 42 for each such first spring box 40.

As will be apparent from the foregoing, if either the first or the second embodiment mentioned above is adopted in which there is included a said pilot pressure fluid inlet 51 that is opening in a direction substantially in parallel to a said hollow portion 40a which contains a said spring 49 and constitutes a said pressure receiving chamber 50 and in which the said pilot pressure fluid inlet 51 is located at a substantially identical position to the end of the said pressure receiving chamber 50 in a direction in parallel to the longitudinal direction of a said spool 22, it can be seen that there will be no undesirable, large projection of the pilot pressure fluid inlet 51 from the hollow portion 40a in the longitudinal direction of the said spool and, as a result, the length of a said spring box 40 may be shortened. This will in turn shorten the entire length of a pilot pressure operated directional control valve, thus reducing its site area as required.

Also, since the said pilot pressure fluid inlet 51 is designed to be opening in a direction in parallel to the said spool longitudinal direction, it can be seen that even in case a plurality of housings are stacked one upon another and thereby interconnected, such an individual pilot pressure fluid inlet 51 may have a piping joint readily connected thereto.

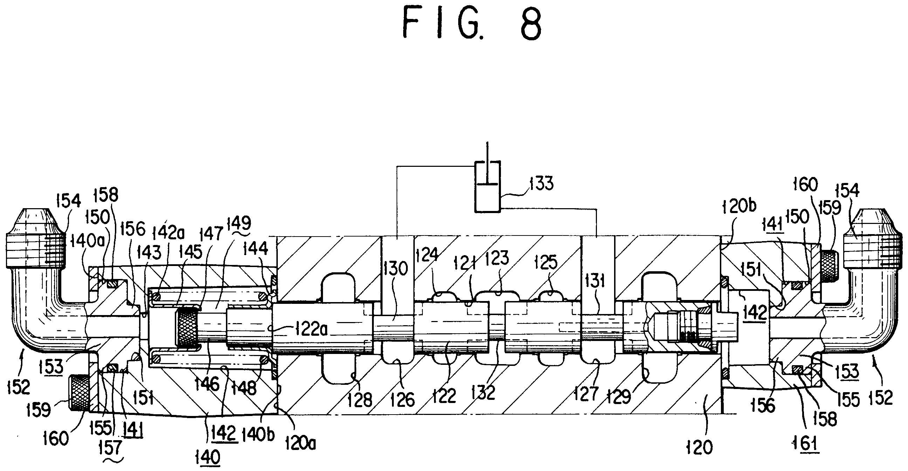

Fig. 8 shows a third embodiment of the pilot pressure operated directional control valve according to the present invention.

As shown in Fig. 8, a housing 120 is formed therein with a spool bore 121 to which a pump port 123, a first and a second load pressure detecting port 124 and 125, a first and a second actuator port 126 and 127 and a first and a second tank port 128 and 129 are opened. The said spool bore 121 has a spool 122 fittingly inserted therein. The said spool 122 is formed with a first and a second small diameter portion 130 and 131 and an intermediate portion 132 so that when held at its neutral position it may block each of the ports mentioned above. And, if the said spool 122 is slidably displaced rightwards in Fig. 8 to take its first position, a communication will be established each between the said pump port 123 and the said second load pressure detecting port 125, between the said first load pressure detecting port 124 and the said first actuator port 126, and between the said second actuator port 127 and the said second tank port 129. It should be noted at this point that the said first load pressure detecting port 124 and the said second load pressure detecting port 125 remain communicated with each other at all the times. Accordingly, it can be seen that a pressure fluid caused to flow into the said pump port 123 will flow through the said first actuator port 126 into an actuator 133 whereas a return fluid out of the said actuator 133 will flow through the said second actuator port 127 into the said second tank port 129.

If the said spool 122 is slidably displaced from the state of Fig. 8 leftwards to take its second position, a communication will be established each between the said pump port 123 and the said first load pressure 124 and between the said second load pressure detecting port 125 and the second actuator port 127. And, since the said first load pressure detecting 124 and the said second load pressure detecting port 125 remain communicated with each other at all times as mentioned above, it can be seen that the pressure fluid out of the said pump port 123 will flow into the said actuator 133. Then, also, the said first actuator port 126 will communicate with the said first tank port 128 to allow the return fluid out of the said actuator 133 to flow into the said first tank port 128.

It is seen that a first spring box 140 is attached to one end surface 120a of the above mentioned housing 120 in the longitudinal direction of the said spool 122. The first spring box 140 is formed with a piping joint attachment hole 141 that is opening to one end surface 140a thereof, a spring attachment hole 142 that is opening to the other end surface 140b thereof and a bore 143 for communicating these attachment holes 141 and 142 with each other. It is seen that a first spring bearing 144 and a second spring bearing 145 are disposed within the said spring attachment hole 142 so that the said first spring bearing 144 may be in contact with both the said one end surface 120a of the housing 120 and a step portion 122a of the said spool 122 whereas the said second spring bearing 145 may be in contact with both a bottom wall 142a of the said spring attachment hole 142 and a step portion 147 of a bolt 146 secured to or integral with the said spool 122. It is also seen that a spring 148 is interposed between the said first and second spring bearings 144 and 145 so that the spool 122 may be held at its neutral position. Also, the interior of the said spring attachment hole 142 here constitutes a pressure receiving chamber 149.

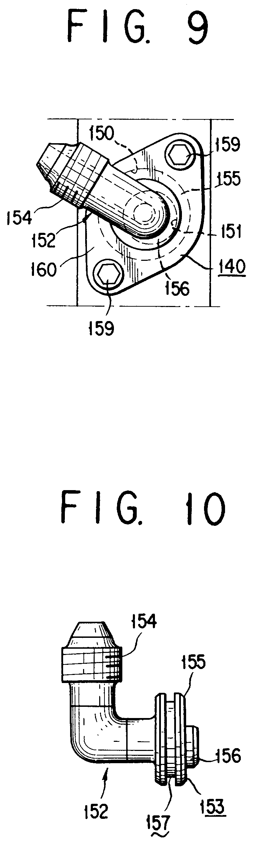

As shown in Figs. 8 and 9, the said spring attachment hole 142 comprises a large diameter hole 150 and a small diameter hole 151 which are eccentric to each other. The said large diameter hole 150 is opening to the said one end surface 140a of the spring box 140 whereas the said small diameter hole 151 has a bottom portion thereof which is opening through the said bore 143 to the said spring attachment hole 142.

As shown in Fig. 10, a piping joint 152 comprises a fitting portion 153 and a pipe connecting portion 154 which are configured to be L-shaped as a whole. The said fitting portion 153 comprises a large diameter portion 155 and a small diameter portion 156 which are eccentric to each other. The said large diameter portion 155 is formed with an annular groove 157 on its outer peripheral surface.

As shown in Figs. 8 and 9, the said piping joint 152 has such a construction that the said large diameter portion 155 and the said small diameter portion 156 may be fitted in the said large diameter hole 150 and the said small diameter hole 151, respectively, of the said first spring box 140, and thus is attached to the latter so that it may not be rotated. And, an O ring 158, which is fitted in the said annular groove 157 of the large diameter portion 155, is pressed against, and thereby attached to, the inner peripheral surface of the said large diameter hole 150 to provide a sealing between the said piping joint 152 and the said first spring box 140. Also, a pressure plate 160, which is attached by bolts 159 to the said one end surface 140a of the first spring box 140, serves to prevent the said piping joint 152 inserted from coming out.

This being the case, it will be seen that the attachment portion of the said piping joint 152 to the said first spring box 140 is sealed by the said O ring 158, the said piping joint 152 inserted can be prevented by the said pressure plate 160 from coming out, and the said piping joint 152 can be fixed in position so as to be not rotatable by means of the said large diameter hole 150 and the said small diameter hole 151 which are eccentric to each other, coupled with the said large diameter portion 155 and the said small diameter portion 156 which are eccentric to each other, and yet the orientation of the said pipe connecting portion 154 of the piping joint 152 can be maintained always constant.

It is also seen that a second spring box 161 is attached to the other end surface 120b of the above mentioned housing 120 in the longitudinal direction of the said spool 122. The said second spring box 161, as is the said first spring box 140 explained above, is provided with a piping joint attachment hole, here designated at 141, and a spring attachment hole, here designated at 142. The said piping joint attachment hole 141 has a small diameter hole 151 that is directly opening to the said spring attachment hole 142 in which no spring is provided.

That is to say, since the spool 122 can be held at its neutral position by the said spring 148 disposed within the said first spring box 140 and is also arranged to be slidably displaceable both leftwards and rightwards against the said spring 148, there is no need to provide a spring within the said second spring box 161. In this connection, it should be noted that as in a said previous embodiment, here again, a said piping joint 152 is attached to the said piping joint attachment hole 141, in the said second spring box 161.

This being the case, it can be seen that the second spring box 161 may here again have a length that is reduced by the space in which a spring must otherwise be contained. This notwithstanding, however, it is not objectionable to replace the said second spring box 161 with the said first spring box 140 as one is to be attached there.

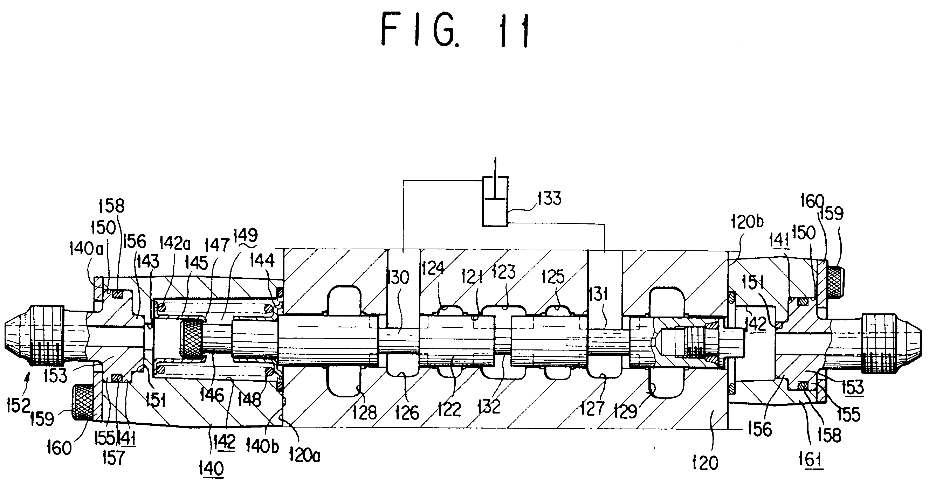

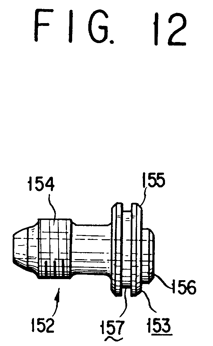

It should also be noted that the said piping joint 152, as in a fourth embodiment of the pilot pressure operated directional control valve as shown in Figs. 11 and 12, may have a said fitting portion 153 and a said pipe connecting portion 154 linearly arranged.

As will be apparent from the preceding paragraphs, the above mentioned third and fourth embodiments of the present invention provide an arrangement whereby it is made possible to shorten the length along which the said fitting portion 153 of the piping joint 152 is fitted into the said piping joint attachment hole 141 of the spring box 140 while providing a required sealing with certainty. Therefore, since the said piping joint attachment hole 141 of the spring box 140 can be shortened, it follows that the length of the said spring box 140 will be shortened to reduce the entire length of the pilot operated directional control valve, thereby reducing its site area as required.

Also, the piping joint 152 inserted can be prevented by the said pressure plate 160 from coming out. Further, since the large diameter portion 155 and the small diameter portion 156 which are eccentric to each other are, respectively, fitted in the large diameter hole 150 and the small diameter hole 151 which are eccentric to each other, it will be seen that the said piping joint 152, without any fear of its subsequent rotation, can be, and does remain, attached firmly in place. In other words, the orientation of the said pipe connecting portion 154 of the L-shaped piping joint 152 may be maintained always constant.

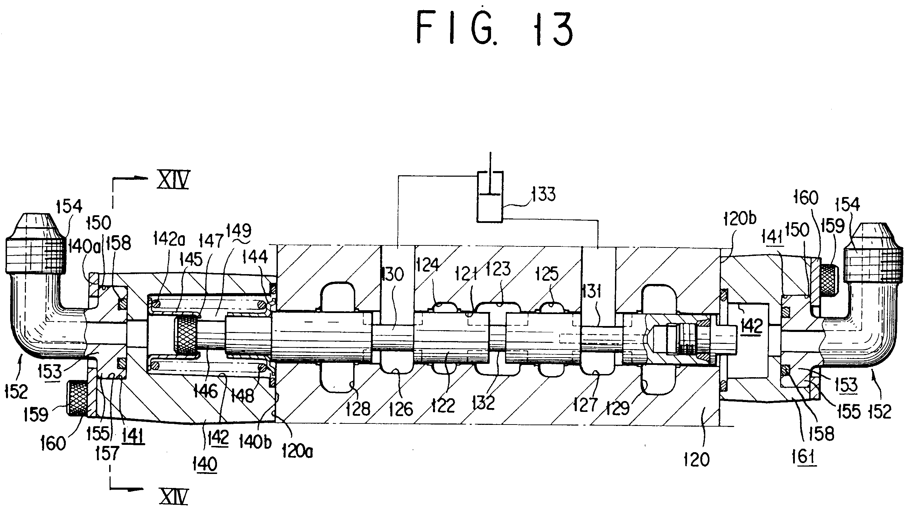

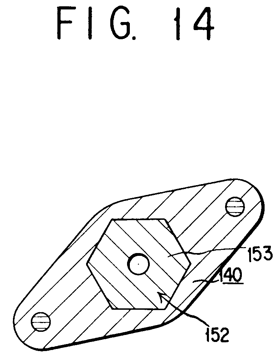

Also, as in a fifth embodiment of the pilot pressure operated directional control valve as shown in Figs. 13 and 14, a said piping joint attachment hole 141 of each of the first and second spring boxes 140 and 161 may be in the form of a regular polygon, and the said fitting portion 153 of the piping joint 152 may also be in the form of a regular polygon that is identical to the above mentioned regular polygon. In this case, a said O ring 158 is fitted between the bottom portion of the said piping joint attachment hole 141 and the end surface of the said fitting portion 153. Then, the orientation of a said pipe connecting portion 154 of the piping joint 152 may be altered in accordance with the configuration of a particular regular polygon and thus by the number of corners of the said particular polygon.

In this case, it should be noted that although a said bolt 159 becomes necessary which is capable of fastening a said pressure plate 160 with an intensive force in order to squeeze the said O ring 158 to a sufficient degree, such a bolt will not give rise to any problem whatsoever since it may not the least project from the said piping joint 152.

According the above mentioned fifth embodiment of the present invention in this way, it becomes possible to shorten the length along which the said fitting portion 153 of the piping joint 152 is fitted into the said piping joint attachment hole 141 of the spring box 140 while providing a required sealing with certainty. Therefore, since the said piping joint attachment hole 141 of the spring box 140 can be shortened, it follows that the length of the said spring box 140 will be shortened to reduce the entire length of the pilot operated directional control valve, thereby reducing its site area as required.

Also, the piping joint 152 inserted can be prevented by the said pressure plate 160 from coming out. Further, since the said fitting portion 153 in a polygonal configuration is fitted in the piping joint attachment hole 141 in a polygonal configuration, it will be seen that the said piping joint 152, without any fear of its subsequent rotation, can be, and does remain, attached firmly in place. In other words, the orientation of the said pipe connecting portion 154 of the L-shaped piping joint 152 may be maintained always constant. And yet, it is also possible to alter its orientation as desired.

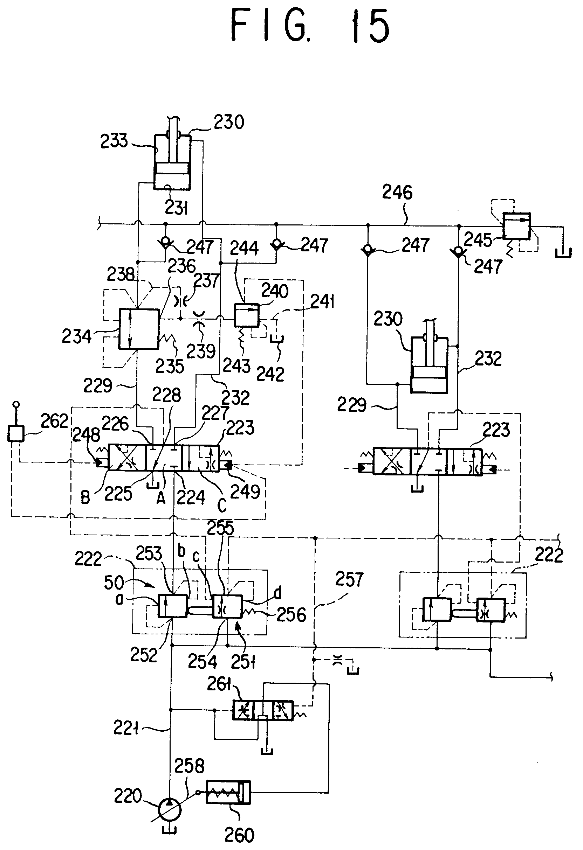

Fig. 15 is a hydraulic circuit diagram of an operating cylinder control apparatus that represents a sixth embodiment of the present invention. As shown in Fig. 15, a hydraulic pump 220 has its discharge path 221 that is provided with a plurality of pressure compensation valves 222, each of which has an output side provided with a directional control valve 223. The directional control valve 223 is designed to establish and block communications among a pump port 224, a tank port 225, a first and a second actuator port 226 and 227 and a load pressure detecting 228. The said first actuator port 226 of the directional control valve 223 is connected to a retention pressure generating chamber 231 of an operating cylinder 230 via a first circuit 229 whereas the said second actuator port 227 thereof is connected to the other chamber 233 of the said operating cylinder 230 via a second circuit 232.

The above mentioned first circuit 229 is provided therein with a locking valve 234, which is designed to assume a thrusting action in the direction of communication under a pressure of the said first circuit 229 and a thrusting action in the direction of blocking both by a spring 235 and under a pressure of a pressure receiving portion 236. The said pressure receiving portion 236 has a pressure of the said retention pressure generating chamber 231 of the operating chamber 230 exerted thereon through a circuit 238 provided with a throttle 237. Also, the said pressure receiving portion 236 is connected to a reservoir 242 through a drain path 241 provided with a throttle 239 and a switching valve 240, and the said switching valve 240 is held at its blocking position by a spring 243 and is arranged to assume a thrusting action to its communicating position under a pressure of a pressure receiving portion 244.

Numeral 245 represents a main relief valve. A circuit 246 upstream of the said main relief valve 245 is connected via a check valve 247 to the side to the operating cylinder 230 of the said locking valve 234 in each said first circuit 229 and is also connected via the said check valve 247 to each said second circuit 232. This arrangement is so made that when the highest pressure in each said first circuit 229 and each said second circuit 232 exceeds a preset pressure of the said main relief valve 245, the latter may operate so as to be relieved.

With such an arrangement adopted, only a single main relief valve alone is made sufficient for use in a circuit assembly provided with a plurality of operating cylinders.

The above mentioned directional control valve 223, when no pilot pressure is acting thereon, will act to block both a communication between the said pump port 224 and the said first actuator port 226 and a communication between the said pump port 224 and the said second actuator port 227, and is thus held at its neutral position A which serves to communicate the said load pressure detecting port 228 with the said tank port 225. It will be switched to a first pressure fluid supply position B with a pressure fluid delivered into a first pressure receiving chamber 248, and to a second pressure fluid supply position C with a pressure fluid delivered into a second pressure receiving chamber 249.

If the said directional control valve 223 is switched to assume the said first pressure fluid supply position B, the said pump port 224 will communicate with both the said first actuator port 226 and the said load pressure detecting port 228, and the said second actuator port 227 will communicate with the said tank port 225. On the other hand, if it is switched to assume the said second pressure fluid supply position C, the said pump port 224 will communicate with both the said second actuator port 227 and the said load pressure detecting port 228, and the said first actuator port 226 will communicate with the said tank port 225.

The above mentioned pressure compensation valves 222 are each provided therein with a check valve 250 and a pressure reduction valve portion 251. The said check valve 250 is designed to assume a thrusting action in the direction of communication under an inlet side pressure acting on a pressure receiving portion a and a thrusting action in the blocking direction under an outlet side pressure acting on a pressure receiving portion b. Its inlet 252 is connected to the said discharge path 221 whereas its outlet 253 is configured to communicate with the said pump port 224 of the directional control valve 223.

The above mentioned pressure reduction valve portion 251 is designed to assume a thrusting action towards the direction in which the said inlet 254 and the said outlet 255 may communicate with each other under a pressure acting on a pressure receiving portion c, to block a communication between the said inlet 254 and the said outlet 255 both by a spring 256 and under a pressure acting on a pressure receiving portion d, and to assume a thrusting action towards the direction in which the said check valve 250 may be blocked. Here, the said pressure receiving portion c is connected to the said load pressure detecting port 228 of the directional control valve 223, the said pressure receiving portion d is connected to the said outlet 255, and the said inlet 254 is connected to the said discharge path 221.

Further, the said outlet 255 of each said pressure compensation valve 222 is arranged to communicate with, and is connected to, a load pressure detecting path 257 so that when a plurality of directional control valves 223 is at the same time operated to simultaneously actuate a like plurality of operating cylinders 230, a highest load pressure may cause each said pressure compensation valve 222 to be brought into its set state, thereby enabling the said plural operating cylinders 230 with varying load pressures to be supplied with the pressurized discharge fluid from a single hydraulic pump simultaneously.

It should be noted that the above mentioned hydraulic pump 220 is of the variable capacity type in which its capacity is increased and decreased by changing the inclination angle of its swash plate 258. A cylinder 260 for controlling the inclination angle of the said swash plate 258 is here adapted to be supplied with the pump discharge pressure through a control valve 261, which is arranged to be switchable both under the the discharge pressure of the said pump 220 and under the load pressure of the said load pressure detecting path 257.

The pressure compensation 222, the cylinder 260 for rotating the said swash plate 258 with a controlled inclination angle and the control valve 261, which are mentioned above, are here provided to allow the discharge pressure fluid from the said single hydraulic pump 220 alone to be supplied simultaneously to a said plurality of the operating cylinders 230. Thus, it is understood that such a combination may be unnecessary either if only a single operation cylinder 230 is to be actuated or if there is no need to actuate a plurality of such operating cylinders 230 at the same time.

Further provided is a pilot valve 262 for furnishing a pilot pressure fluid into the said first and second pressure receiving chambers 248 and 249 of each said directional control valve 223. The pilot pressure fluid in the said second pressure receiving chamber 249 is supplied to the pressure receiving portion 244 of the said switching valve 240.

An explanation will now be given with respect the operation of the above mentioned sixth embodiment of the present invention.

When a pilot pressure is not applied from the said pilot valve 262 to the pressure receiving portion 248 or 249 of a said directional control valve 223 and thus the said directional control valve 223 is held at its neutral position A, the pilot pressure is not applied to the pressure receiving portion of the said switching valve 240, either, so that the latter may be in a blocking state. Then, since the pressure (i. e., the retention pressure) within the said retention pressure generating chamber 231 of a said operating cylinder 230 acts on the pressure receiving portion 236 of the said locking valve 234 so that the latter may be held at a blocking position by the said spring 235, the pressure fluid may not flow through the said directional control valve 223, and thus may not leak into any said reservoir, thereby effectively preventing any said operating cylinder from suffering a spontaneous fall. At this stage, however, the said retention pressure, which acts on the said main relief valve 245, is lower than a preset pressure therein and hence the said main relief valve 245 will remain inoperative.

It should be noted at this point that if the said pressure within the retention pressure generating chamber 231 tends to be abnormally elevated due to an inertia load or an external force in the above mentioned state, any elevated pressure will then act on the said relief valve 245 through the said check valve 247 and if it exceeds the said preset pressure in the main relief valve 245, the latter will act to be relieved to permit the excessive pressure fluid to flow into the reservoir, thereby preventing the said retention pressure from rising abnormally.

Also, when the said pilot valve 262 is operated to supply the pilot pressure fluid into the said first pressure receiving chamber 248 of the directional control valve 223, the said directional control valve 223 will be switched to the first pressure supply position B. Then, the pressure fluid will be supplied to the said first circuit 229 to cause the said locking valve 234 to be opening.

Also, when the said pilot valve 262 is operated to supply the pilot pressure fluid into the said second pressure receiving chamber 249 of the directional control valve 223, the said directional control valve 223 will be switched to the second pressure fluid supply position C. At the same time, the pressure fluid will be supplied to the pressure receiving portion 244 of the said switching valve 240 to bring the latter to the position of communication. As a result, since the said drain path 241 of the locking valve 234 is brought into a communication with the said reservoir 242, the said locking valve 234 will be opened to allow the pressure fluid to flow out of the said retention pressure generating chamber 231 of the operating cylinder 230 into the said tank port 225 of the directional control valve 223.

An explanation will next be given with respect to a specific structure of the directional control valve 223 for use in the present embodiment of this invention.

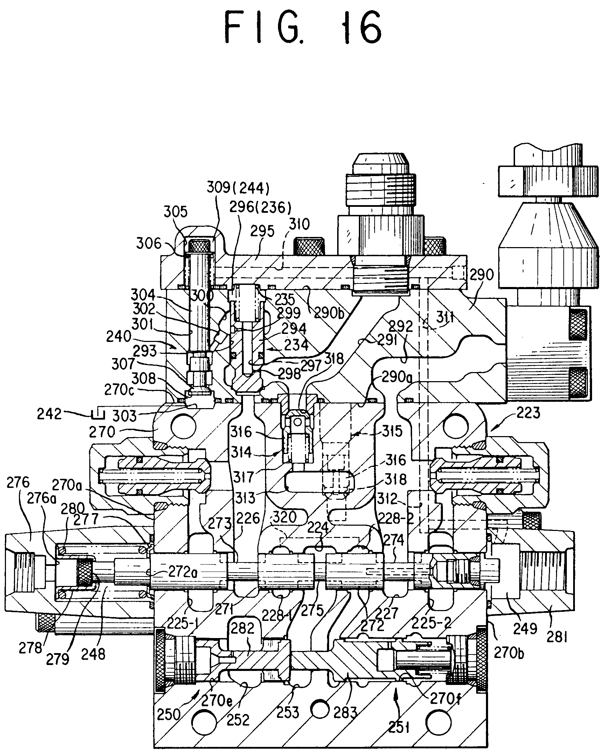

As shown in Fig. 16, the said directional control valve 223 has a valve block 270 formed therein with a spool bore 271 to which a pump port 224, a first and a second load pressure detecting port 228-1 and 228-2, a first and a second actuator port 226 and 227 and a first and a second tank port 225-1 and 225-2 are opened. A spool 272 is fittingly inserted in the said spool bore 271 and is slidably displaceable therein to establish and block communications among these ports mentioned above. It should be noted here again that the said first and second load pressure detecting ports (228-1 and 228-2) remain in communication with each other, here via a fluid bore 320.

The above mentioned spool 272 is formed with a first and a second small diameter portion 273 and 274 and an intermediate small diameter portion 275 which serve to block each of the ports mentioned above when the said spool 272 is held at its neutral position as shown in Fig. 16. And, if the said spool 272 is slidably displaced rightwards in Fig. 16 to take its first pressure fluid supply position, a communication will be established each between the said pump port 224 and the said second load pressure detecting port 228-2 and between the said first load pressure detecting port 228-1 and the said first actuator port 226. Then, the pressure fluid caused to flow into the said pump port 224 will flow into the said first actuator port 226. Also, since the said second actuator port 227 is then brought into a communication with the said second tank port 225-2, the return fluid will now flow out of the said second actuator port 227 into the second tank port 225-2.

If the said spool 272 is slidably displaced from the state shown in Fig. 16 towards the left hand side to take its second pressure fluid supply position, a communication will be established each between the said pump port 224 and the said first load pressure detecting port 228-1 and between the said second load pressure detecting port 228-2 and the said second actuator port 227. Then, the pressure fluid introduced into the said pump port 224 will flow into the said second actuator port 227. Also, since the said first actuator port 226 is then brought into a communication with the said first tank port 225-1, the return fluid will now flow out of the said first actuator port 226 into the said first tank port 225-1.

It is seen that a first spring box 276 is attached to one end surface 270a of the above mentioned valve block 270 in the longitudinal direction of the said spool 272. The said first spring box 276 is provided therein with a first spring bearing 277 and a second spring bearing 278 in such a manner that the said first spring bearing 277 may be in contact with both the said one end surface 270a of the valve block 270 and a step portion 272a of the said spool 272 and the said second spring bearing 278 may be in contact with a bottom wall 276a and a step portion 279 of the said spool 272. A spring 280 is interposed between the said first and second spring bearings 277 and 278 such that the said spool 272 may be held at its neutral position. Also, the interior of the said first spring box 276 constitutes a first pressure receiving chamber 248.

It is also seen that a second spring box 281 is attached to the other end surface 270b Of the above mentioned valve block 270 and its interior constitutes a second pressure receiving chamber 249.

Beneath the above mentioned valve block 270 there lie a said check valve section 250 which is constituted by a check valve bore 270e and a spool 280 inserted therein, and a said pressure reduction valve section 251 which is constituted by a pressure reduction valve bore 270f and a spool 283 inserted therein. The said two spools 282 and 283 are opposing to each other. And, the said check valve section 250 and the said pressure reduction valve section 251 together constitute a said pressure compensation valve.

A mating surface 270c of the above mentioned valve block 270 is joined and connected with a mating surface 290a of a block 290, which is formed therein with a first fluid bore 291 that is opening to the first mating surface 290a and a second fluid bore 292. The said first fluid bore 291 is designed to communicate with the said first actuator port 226 that is opening to the said mating surface 270c of the valve block 270 whereas the said second fluid bore 292 is designed to communicate with the said second actuator port 227 that is opening to the said mating surface 270c of the valve block 270, Further, the said first fluid bore 291 is provided with a said locking valve 234.

The said locking valve 234 includes a poppet 294 which is fittingly inserted in a valve bore 293 that is opening to a second mating surface 290b of the said block 290 and which is being pushed by a said spring 235 in its closing direction. The said spring 235 is received in a spring chamber 296 (which represents the pressure receiving portion 236 in Fig. 15) that is defined by a cap 295 which is mounted on the said second mating surface 290b of the block 290. And, the said spring chamber 296 is opening to the said first fluid bore 291 through an axial bore 297 and a narrow bore 298 (which collectively represent the circuit 238 including the throttle 237 in Fig. 15) that are formed in the said poppet 294. Here, the said axial bore 297 is designed to communicate with a port 300 of a valve bore 293 through a narrow bore 299.

The above mentioned block 290 is formed therein with a bore 301 that is opening to both the said first mating surface 290a and the said second mating surface 290b. The said bore 301 is designed to communicate with the above mentioned port 300 through a fluid bore 302, and also to communicate with a said reservoir 242 through a recess 303 that is formed in the said mating surface 290a of the block 290. Also, the said bore 301 has a valve 304 fittingly inserted therein which constitutes the above mentioned switching valve 240. The said valve 304 has one end facing a blind hole 305 in the said cap 295 and is arranged to be energized unidirectionally by a spring 306 so that a conical portion 307 formed at its other end may be in contact with a sheet 308 so as to block a communication between the above mentioned port 300 and the above mentioned recess 303. Also provided is a spring chamber 309 (which represents the pressure receiving portion 244 in Fig. 15) that is designed to communicated with the above mentioned second pressure chamber 249 through a bore 310 which is formed in the said cap 295, a fluid bore 311 which is formed in the said block 290 and a fluid bore 312 which is formed in the said valve block 270, so that the pressure fluid in the said second pressure receiving chamber 249 may flow into the said spring chamber 309 through the said fluid bores 312, 311 and 310 to push up the said valve 304 and that the said conical portion 307 may thereby be departed from the said sheet 308 to establish a communication between the said port 300 and the said recess 303, thereby permitting the pressure fluid within the said first fluid bore 291 to flow into the said reservoir 242. These components here collectively constitute the above mentioned switching valve 240.

The above mentioned valve block 270 is formed therein with a drain port 313, which is designed to communicate with the said first fluid bore 291 through a first check valve 314 and also to communicate with the said second actuator port 227 through a check valve 315. The said first and second check valves 314 and 315 comprise a valve 316 that is attached by a spring 317 to a sheet 318 under a pressure. Here, the said first check valve 314 allows the pressure fluid to flow from the said first fluid bore 291 to the said drain port 313 whereas the said second check valve 315 allows the pressure fluid to flow from the said second actuator port 227 to the said drain port 313.

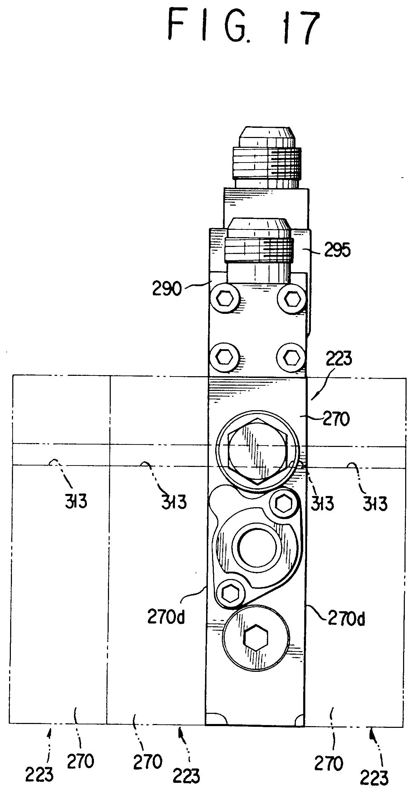

As shown in Fig. 17, drain ports 313 as mentioned above, respectively, for a plurality of blocks 270, are designed to be each opening to adjacent block joining surfaces 270d at both sides of each block 270 in the direction of its width and are designed to be interconnected by joining together the respective blocks 270 of such a plurality of directional control valves 223. And, a said main relief valve 245 is attached to the valve block 270 that is located at an end of a series of such valve blocks 270.

As will be apparent from the foregoing description, it can be seen that according to the sixth embodiment of the present invention in which a said main relief valve 245 for preventing an abnormally elevated pressure within the retention pressure generating chamber 231 of an operating cylinder 230 can be placed separately, it will be sufficient to provide only a said locking valve 234 and a said switching valve 240 correspondingly to each of the operating cylinders 230. And yet, since the said main relief valve 245 can commonly act for a plurality of operating cylinders 230, the area of the site on which a unit for preventing a spontaneous fall of any of the plural operating cylinders 230 is mounted may be reduced. Also, since it suffices to provide such a single main relief valve 245 alone, it can be seen that the equipment may be made less costly.

While the present invention has hereinbefore been described with respect to certain illustrative embodiments thereof, it will readily be appreciated by a person skilled in the art to be obvious that many alterations thereof, omissions therefrom and additions thereto can be made without departing from the essence and the scope of the present invention. Accordingly, it should be understood that the present invention is not limited to the specific embodiments thereof set out above, but includes all possible embodiments thereof that can be made within the scope with respect to the features specifically set forth in the appended claims and encompasses all equivalents thereof.

## Claims

1. A pilot pressure operated directional control valve in which a housing is formed therein with a spool bore having a plurality of ports, said spool bore has a spool fittingly inserted therein so as to be slidably displaceable therein and said spool is adapted to be slidably displaced both with a spring and under a pilot pressure led into a pressure receiving chamber, and in which:
a spring box is attached to an end surface of said housing in a longitudinal direction of said spool; and
said spring box is adapted to be formed with a hollow portion containing said spring and forming a pressure receiving chamber, and a pilot pressure fluid inlet for communicating with said hollow portion and opening in the longitudinal direction of said spool.

2. A pilot pressure operated directional control valve as set forth in claim 1, in which said spring box comprises a first cylindrical body and a second cylindrical body which are integrally arranged in a pair and in parallel to each other and which are opening to a left hand side and a right hand side which are opposite to each other; said hollow portion is formed within said first cylindrical body; an interior of said second cylindrical body is adapted to be in a communication with an interior of said first cylindrical body; and said pilot pressure fluid inlet is constituted of an opening portion of said second cylindrical body.

3. A pilot pressure operated directional control valve as set forth in claim 1 or claim 2, in which a piping joint is connected to said pilot pressure fluid inlet.

4. A pilot pressure operated directional control valve as set forth in claim 3, in which:
said pilot pressure fluid inlet is formed with a piping joint attachment hole; said piping joint attachment hole is constituted of a large diameter hole and a small diameter hole which are eccentric to each other; a piping attachment joint is constituted of a fitting portion comprising a large diameter portion and a small diameter portion which are eccentric to each other and a pipe connecting portion; said fitting portion is adapted to be fittingly inserted into said piping joint attachment hole; and a pressure plate is bolted with said spring box to act to prevent said fitting portion from coming out of said piping joint attachment hole.

5. A pilot pressure operated directional control valve as set forth in claim 3, in which:
said pilot pressure fluid inlet is formed with said piping joint attachment hole; said piping joint attachment hole is in the form of a regular polygon; said piping joint is constituted of a fitting portion in the form of a regular polygon and a pipe connecting portion; said fitting portion is adapted to be fittingly inserted into said piping joint attachment hole; and a pressure plate is bolted with said spring box to act to prevent said fitting portion from coming out of said piping joint attachment hole.

6. A pilot pressure operated directional control valve as set forth in claim 4 or claim 5, in which an interstice between an inner peripheral portion of said piping joint attachment hole and an outer peripheral portion of said fitting portions adapted to be sealed by a sealing material.

7. A pilot pressure operated directional control valve as set forth in claim 4 or claim 5, in which an interstice between a bottom portion of said piping joint attachment hole and an end surface of said fitting portion is adapted to be sealed by a sealing material.

8. An operating cylinder control apparatus, which comprises:
a directional control valve;
a locking valve which is disposed in a circuit for interconnecting an actuator port of said directional control valve and a retention pressure generating chamber of said operating cylinder, which has a pressure receiving portion and a spring, which is adapted to be thrusted in a direction of communication by an outlet pressure of said directional control valve and the retention pressure within said operating cylinder and which is adapted to be thrusted in a direction of blocking by said retention pressure within said operating cylinder and said spring, said retention pressure acting on said pressure receiving portion;
a switching valve which is disposed between said pressure receiving portion of said locking valve and a reservoir, which is adapted to be energized by said spring to take its blocking position and which is adapted to take its communicating position by means of a switching means brought into a position for communicating said circuit with a reservoir; and
a main relief valve which is connected via a check valve to a side to said operating cylinder of said locking valve in said circuit.

9. An operating cylinder control apparatus, as set forth in claim 8, in which:
a valve block equipped with said locking valve and said switching valve is connected to a valve block of said directional control valve; an inlet side of said locking valve is adapted to communicate with the actuator port of said directional control valve; and each of said valve blocks is formed therein with a fluid bore for communicating the pressure receiving portion on which said pilot pressure of said directional control valve is acting with the pressure receiving portion of a side to said spring of said switching valve.

10. An operating cylinder control apparatus, which comprises:
a directional switch valve which is provided with a pump port, a tank port and a first and a second actuator port, which when at its neutral position is adapted to block said first and second actuator ports, which when at its first pressure fluid supply position is adapted to communicate between said pump port and said first actuator port and to communicate between said second actuator port and said tank port and which when at its second pressure fluid supply position is adapted to communicate between said pump port and said second actuator port and to communicate the said first actuator port and the said tank port;
a first circuit for connecting said first actuator port to a retention pressure generating chamber of said operating cylinder;
a second circuit for connecting said second actuator port to the other chamber of said operating cylinder;
a locking valve which is disposed in said first circuit, which is adapted to be thrusted in a direction of communication both under a pressure of said first actuator port and under a pressure within said retention pressure generating chamber and which is adapted to be thrusted in a direction of blocking both by a spring and under the pressure within said retention pressure generating chamber acting on a pressure receiving portion;
a switching valve which is disposed in a drain path connected to the pressure receiving portion of said locking valve, which is held at a blocking position by a spring and which is brought to a communicating position under a pressure at the pressure receiving portion; and
a main relief valve which is connected to a side to said retention pressure generating chamber of said locking valve in said first circuit and to said second circuit via respective check valves, and in which
said second pressure receiving chamber of said directional control valve is connected to said pressure receiving portion of said switching valve.
